# EUROPEAN PATENT APPLICATION

(11) **EP 2 605 108 A1**
(43) Date of publication of application: **19.06.2013**
(21) Application number: 12167531.8
(22) Date of filing: 10.05.2012
(51) Int. Cl.: G06F 3/01

(54) **Distant multipoint remote control device and system.**

(30) Priority: 13.12.2011 TW 100146025
(71) Applicant: Askey Technology (Jiangsu) Ltd., Economic-Technological Development Area Wujiang Jiangsu (CN); Askey Computer Corp., New Taipei City 235 (TW)
(72) Inventor: Lin, Cheng-Kuei, 116 Taipei City (TW); Hsieh, Ching-Feng, 108 Taipei City (TW); Cheng, Wei Yuan, 235 New Taipei City (TW)
(74) Representative: Acco, Stefania

(57) **Abstract**

A distant multipoint remote control device and a system for allowing users to exercise multipoint control over an electronic apparatus at a remote end are introduced. The distant multipoint remote control device comprises at least two sensing modules for sensing users' operation and a remote controller independent of the two sensing modules for sending to the electronic apparatus a control signal serving as multipoint mobile information, such that the electronic apparatus performs a corresponding control operation and displays a corresponding result on a screen. The distant multipoint remote control device and system not only render users' control convenient but also enable accurate response to users' control behavior.

## Description

### FIELD OF THE INVENTION

The present invention relates to multipoint remote control devices and systems, and more particularly, to a distant multipoint remote control device and system.

### BACKGROUND OF THE INVENTION

A remote control device (such as a mouse or a remote controller) is usually solely equipped with a key for users to press and control an electronic apparatus located at a remote end. Due to the advancement of touch control technology, an increasing number of electronic apparatuses can be controlled by single-point or even multipoint touch behavior.

In general, a remote controller for use with an electronic apparatus is usually compact and lightweight. Although the remote controller is provided thereon with a touchscreen for controlling the electronic apparatus at a remote end and displaying a control result on the screen, the precision of control has hitherto remained unimproved. It is because the difference in size between the touchscreen on the remote controller and a display screen at a remote end is too great to allow a user to have precise control over the displacement of his or her control-triggering fingertip on the touchscreen of the remote controller. As a result, not only is erroneous unexpected selection likely to occur to the touchscreen, but errors are common in the zooming control exercised by multipoint touch.

### SUMMARY OF THE INVENTION

It is an objective of the present invention to enable users to perform control behavior conveniently and accurately.

In order to achieve the above and other objectives, the present invention provides a distant multipoint remote control device for controlling an electronic apparatus at a remote end, comprising: a first sensing module for sensing a first motion state and generating a first state signal based on the first motion state; a second sensing module for sensing a second motion state and generating a second state signal based on the second motion state; and a remote controller connected to the first sensing module and the second sensing module for generating a control signal of a multipoint mobile information based on the first and second state signals received so as to operate the electronic apparatus.

In order to achieve the above and other objectives, the present invention further provides a distant multipoint remote control system comprising a distant multipoint remote control device, an electronic apparatus, and a screen. The distant multipoint remote control device comprises: a first sensing module disposed at a first finger of the user for sensing a motion state of the first finger and generating a first state signal based on the motion state; a second sensing module disposed at a second finger of the user for sensing a motion state of the second finger and generating a second state signal based on the motion state; and a remote controller connected to the first sensing module and the second sensing module for generating the control signal of a multipoint mobile information based on the first and second state signals received. The electronic apparatus receives the control signal and performs a control operation corresponding thereto. The screen connected to the electronic apparatus and displaying a corresponding result based on the control operation.

In an embodiment, the sensing module comprises a combination of a 3D gyroscope and an acceleration sensor, a combination of two 2D gyroscopes and an acceleration sensor, or a 3D acceleration sensor.

In an embodiment, the first sensing module and the second sensing module are connected to the remote controller by wired or wireless communication.

In an embodiment, the remote controller comprises at least a key for controllably switching on and switching off the second sensing module.

In an embodiment, the first sensing module, the second sensing module or the remote controller further comprises an anchor portion. The anchor portion is a ring, a clamping device, or a cladding device. The anchor portion of the remote controller is worn on the user's wrist.

In an embodiment, the first sensing module and the second sensing module are positioned outside the remote controller.

In an embodiment, the remote controller comprises a procedure control unit for responding to an operation state of the first sensing module, an operation state of the second sensing module, or a touch control operation so as to controllably switch on and switch off the first sensing module or the second sensing module.

In an embodiment, the distant multipoint remote control device further comprises a third sensing module for sensing a third motion state and generating a third state signal based on the third motion state so as for the remote controller to estimate the control signal denoting a multipoint mobile information.

Accordingly, the present invention enables users to sense operation behavior with sensing modules directly and control an electronic apparatus at a remote end, thereby rendering remote control convenient and accurate.

### BRIEF DESCRIPTION OF THE DRAWINGS

Objectives, features, and advantages of the present invention are hereunder illustrated with specific embodiments in conjunction with the accompanying drawings, in which:
FIG. 1 is a functional block diagram of a distant multipoint remote control device according to an embodiment of the present invention;
FIG. 2 is a functional block diagram of a distant multipoint remote control system according to an embodiment of the present invention;
FIG. 3 is a schematic view of the application of a distant multipoint remote control device in a distant multipoint remote control system according to an embodiment of the present invention; and
FIG. 4 is another schematic view of the application of a distant multipoint remote control device in a distant multipoint remote control system according to an embodiment of the present invention.

### DETAILED DESCRIPTION OF THE PREFERRED EMBODIMENTS

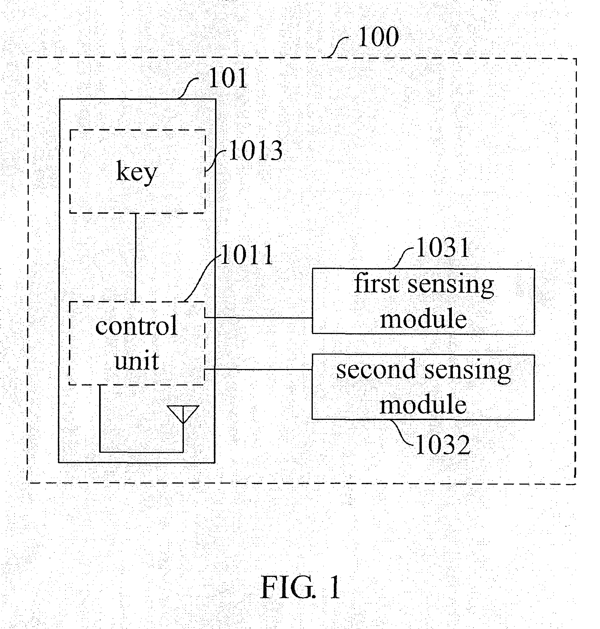

Referring to FIG. 1, there is shown a functional block diagram of a distant multipoint remote control device 100 according to an embodiment of the present invention. The distant multipoint remote control device 100 comprises a first sensing module 1031, a second sensing module 1032, and a remote controller 101.

The first sensing module 1031 senses a motion state of an object and generates a first state signal based on the motion state of the object. In an embodiment, the first sensing module 1031 further comprises an anchor portion (such as a ring, a clamping device, or a cladding device) disposed at a first finger (such as an index finger) of the user for sensing a motion state of the first finger and generating the first state signal based on the motion state of the first finger.

The second sensing module 1032 senses a motion state of another object (such as a second finger in this embodiment) and generates a second state signal based on the motion state of the object. In an embodiment, the second sensing module 1032 further comprises an anchor portion (such as a ring, a clamping device, or a cladding device) disposed at a second finger (such as the thumb) of the user for sensing a motion state of the second finger and generating the second state signal based on the motion state of the second finger.

The sensing module comprises a combination of a 3D gyroscope and an acceleration sensor, a combination of two 2D gyroscopes and an acceleration sensor, or a 3D acceleration sensor.

The remote controller 101 receives the first state signal and the second state signal and estimates a control signal denoting a multipoint mobile information based on the first and second state signals received so as to control an electronic apparatus at a remote end. The first sensing module 1031 and the second sensing module 1032 are positioned outside rather than inside the remote controller 101. The sensing modules are connected to the remote controller 101 by a wired or wireless means. FIG. 1 is exemplified by wired connection.

The remote controller 101 comprises a built-in control unit 1011 for processing and computing the state signals. The remote controller 101 further comprises at least a key 1013 for controllably switching on and switching off the first sensing module 1031 and the second sensing module 1033. In this regard, switching on and switching off the first sensing module 1031 and the second sensing module 1033 means receiving compulsorily or not receiving the state signal of a specific one of the sensing modules by means of a key; alternatively, it means disconnecting the power to a specific one of the sensing modules directly. In another embodiment, a procedure control unit (which is not shown in the accompanying drawings but is capable of performing software control) responds to a touch control operation so as to controllably switch on or switch off the sensing modules. For example, the sensing modules are selectively switched on or switched off by means of the touchscreen on the remote controller; alternatively, the first sensing module or the second sensing module is switched on or switched off according to the operation state of a specific sensing module (for example, when both the first sensing module and the second sensing module have the same operation state.) The remote controller 101 further comprises an anchor portion (such as a ring, a clamping device, or a cladding device) worn on the user's wrist. For example, the remote controller 101 is a bracelet-like remote controller that features ease of use.

In the above embodiments, two sensing modules are provided; however, in practice, an additional third sensing module or more additional sensing modules are provided in order to attain diversified control.

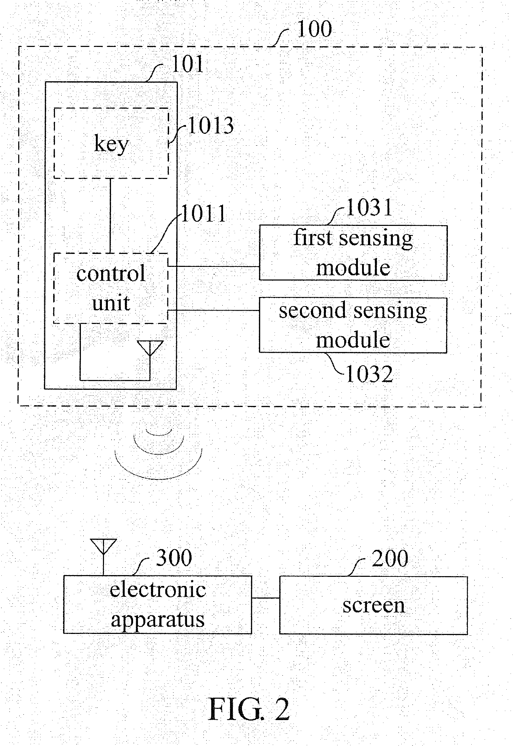

Referring to FIG. 2, there is shown a functional block diagram of a distant multipoint remote control system according to an embodiment of the present invention. FIG. 2 is based on the distant multipoint remote control device 100 shown in FIG. 1. The distant multipoint remote control device 100 sends the control signal to an electronic apparatus 300 by means of a wireless module (that applies various conventional wireless communication techniques). The electronic apparatus 300 displays on a screen 200 a corresponding control result, such as moving a cursor or zooming in/out a picture.

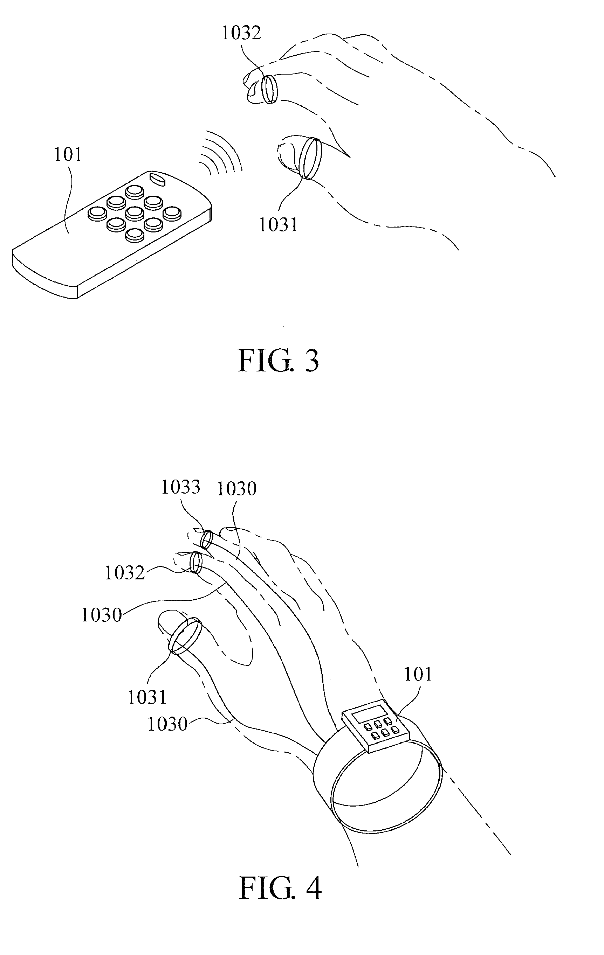

Referring to FIG. 3, there is shown a schematic view of the application of the distant multipoint remote control device 100 in a distant multipoint remote control system according to an embodiment of the present invention. As shown in the diagram, the first sensing module 1031 and the second sensing module 1032 are put around the fingertips of two fingers (such as, the index finger and the thumb) of the user, respectively, and connected to the remote controller 101 by a wireless means.

Referring to FIG. 4, there is shown another schematic view of the application of the distant multipoint remote control device 100 in a distant multipoint remote control system according to an embodiment of the present invention. As shown in the diagram, the first sensing module 1031, the second sensing module 1032, and a third sensing module 1033 are put around the fingertips of three fingers of the user, respectively, and connected to the remote controller 101 worn on the user's wrist by a wireless means, for example, when connected to a signal line 1030. The third sensing module 1033 in this embodiment is the additional sensing module used to supplement the two sensing modules.

FIG. 3 and FIG. 4 illustrate two different embodiments, respectively. However, variations therein can be accomplished by simply modifying FIG. 3 and FIG. 4. For example, FIG. 4 can be amended to show that the remote controller 101 is connected to each of the sensing modules by wireless transmission.

In conclusion, the present invention enables users to sense operation behavior with sensing modules directly and control an electronic apparatus at a remote end. Hence, not only is control convenient and accurate, but it is feasible to eliminate a drawback of the prior art - control is inaccurate because a large screen is controlled by means of a small touchscreen.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A distant multipoint remote control device for controlling an electronic apparatus at a remote end, comprising:
a first sensing module for sensing a first motion state and generating a first state signal based on the first motion state;
a second sensing module for sensing a second motion state and generating a second state signal based on the second motion state; and
a remote controller connected to the first sensing module and the second sensing module for generating a control signal of a multipoint mobile information based on the first and second state signals received so as to operate the electronic apparatus.

2. The distant multipoint remote control device of claim 1, wherein the first sensing module and the second sensing module each comprise one of a combination of a 3D gyroscope and an acceleration sensor, a combination of two 2D gyroscopes and an acceleration sensor, and a 3D acceleration sensor.

3. The distant multipoint remote control device of claim 1, wherein the first sensing module and the second sensing module are connected to the remote controller by wired or wireless communication.

4. The distant multipoint remote control device of claim 1, wherein the remote controller comprises at least a key for controllably switching on and switching off the second sensing module.

5. The distant multipoint remote control device of claim 1, further comprising a third sensing module for sensing a third motion state and generating a third state signal based on the third motion state so as for the remote controller to estimate the control signal denoting a multipoint mobile information.

6. The distant multipoint remote control device of claim 1, wherein the first sensing module and the second sensing module are positioned outside the remote controller.

7. The distant multipoint remote control device of claim 1, wherein the first sensing module, the second sensing module or the remote controller further comprises an anchor portion

8. The distant multipoint remote control device of claim 7, wherein the anchor portion is at least one of a ring, a clamping device, and a cladding device.

9. The distant multipoint remote control device of claim 1, wherein the remote controller further comprises a procedure control unit for responding to an operation state of the first sensing module, an operation state of the second sensing module, or a touch control operation so as to controllably switch on and switch off the first sensing module or the second sensing module.

10. A distant multipoint remote control system, comprising:
a distant multipoint remote control device for generating a control signal of a multipoint touch behavior of a user, the distant multipoint remote control device comprising:
a first sensing module disposed at a first finger of the user for sensing a motion state of the first finger and generating a first state signal based on the motion state;
a second sensing module disposed at a second finger of the user for sensing a motion state of the second finger and generating a second state signal based on the motion state; and
a remote controller connected to the first sensing module and the second sensing module for generating the control signal of a multipoint mobile information based on the first and second state signals received;
an electronic apparatus for receiving the control signal and performing a control operation corresponding thereto; and
a screen connected to the electronic apparatus and displaying a corresponding result based on the control operation.

11. The distant multipoint remote control system of claim 10, wherein the first sensing module and the second sensing module each comprise one of a combination of a 3D gyroscope and an acceleration sensor, a combination of two 2D gyroscopes and an acceleration sensor, and a 3D acceleration sensor.

12. The distant multipoint remote control system of claim 10, wherein the first sensing module and the second sensing module are connected to the remote controller by wired or wireless communication.

13. The distant multipoint remote control system of claim 10, wherein the remote controller comprises at least a key for controllably switching on and switching off a power to the second sensing module.

14. The distant multipoint remote control system of claim 10, wherein the remote controller further comprises an anchor portion worn on the user's wrist.

15. The distant multipoint remote control device of claim 11, wherein the remote controller comprises a procedure control unit for responding to a touch control operation so as to controllably switch on and switch off the first sensing module or the second sensing module.

16. The distant multipoint remote control system of claim 10, wherein the first finger is an index finger.
